Europäisches Patentamt

European Patent Office

Office européen des brevets

(19)

(11) Numéro de publication: **0 022 021**
**B1**

(12) **FASCICULE DE BREVET EUROPEEN**

(45) Date de publication du fascicule du brevet: **17.11.82**

(21) Numéro de dépôt: **80400949.6**

(22) Date de dépôt: **25.06.80**

(51) Int. Cl.³: **F 03 C 1/00, F 01 L 21/04, B 01 D 35/12, F 15 B 15/08**

(54) **Moteur hydraulique à piston alternatif.**

(30) Priorité: **02.07.79 FR 7917154**

(43) Date de publication de la demande:
**07.01.81 Bulletin 81/1**

(45) Mention de la délivrance du brevet:
**17.11.82 Bulletin 82/46**

(84) Etats contractants désignés:
**AT BE CH DE FR GB IT LI NL SE**

(56) Documents cités:
**FR - A - 1 360 787**
**FR - A - 1 387 403**
**FR - A - 2 192 856**
**GB - A - 20 674**
**US - A - 1 578 199**
**US - A - 3 530 769**

(73) Titulaire: **Moatti, Georges**
**17 rue Gutenberg**
**F-92100 Boulogne-sur-Seine (FR)**

(72) Inventeur: **Moatti, Georges**
**17 rue Gutenberg**
**F-92100 Boulogne-sur-Seine (FR)**

(74) Mandataire: **Descourtieux, Philippe et al,**
**CABINET BEAU de LOMENIE 55 rue d'Amsterdam**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Moteur hydraulique à piston alternatif.

L'invention concerne un moteur hydraulique à piston alternatif, destiné notamment à entraîner le distributeur rotatif d'un filtre autonettoyable. De tels moteurs ont déjà été décrits dans les brevets français no. 72 26048 et 71 18275, et dans le brevet américain 1 578 199 mais leurs organes de commande et de distribution de fluide moteur sont compliqués et séparés les uns des autres. Le changement de certaines pièces nécessitait donc des démontages généralement longs et difficiles.

Le but de l'invention est de regrouper dans le piston lui-même un grand nombre d'organes permettant ainsi une réparation aisée en cas d'une défectuosité quelconque, puisqu'il suffit de démonter le piston.

L'invention a donc pour objet un moteur hydraulique, notamment pour l'entraînement d'un filtre autonettoyable, comportant un piston se déplaçant, selon un mouvement de va-et-vient commandé automatiquement, à l'intérieur d'un cylindre dans les parois duquel débouchent une canalisation d'alimentation en fluide hydraulique sous pression et une canalisation d'évacuation dudit fluide. Le piston définit avec le cylindre deux chambres pour le réception du fluide hydraulique et comporte des organes de commande parallèles à l'axe du piston et coulissant dans celui-ci. Les organes de commande assurent la communication sélective et successive de la canalisation d'alimentation et de la canalisation d'évacuation avec chacune desdites chambres, par l'intermédiaire d'un conduit ménagé à l'intérieur du piston.

Selon l'invention, le piston est constitué par un noyau central et un manchon monté de façon étanche sur le noyau, lequel présente à sa périphérie au moins trois rainures annulaires formant avec la paroi interne du manchon trois gorges annulaires étanches, la gorge médiane étant en communication permanente avec la canalisation d'évacuation et les deux gorges adjacentes étant en communication permanente avec la canalisation d'alimentation. La gorge médiane et l'une des deux gorges adjacentes sont mises sélectivement et respectivement en communication avec les deux chambres du cylindre par l'intermédiaire d'un distributeur à tiroir coulissant monté dans le piston, dont les orifices de sortie sont reliés à chacune des deux chambres par des conduits ménagés dans le noyau du piston et débouchant sur chacune des faces de celui-ci.

D'autres caractéristiques et avantages de l'invention seront mieux compris à la lecture de la description qui va suivre et en se référant aux dessins annexés dans lesquels:

— la figure 1 est une vue en coupe suivant la ligne I—I de la figure 2, d'un moteur selon l'invention;

— la figure 2 est und coupe suivant la ligne II—II de la figure 1;

— la figure 3 est une coupe suivant la ligne III—III de la figure 2;

— la figure 4 est une coupe suivant la ligne IV—IV de la figure 3;

— la figure 5 est une vue analogue à celle de la figure 4 avec le piston en position d'inversion de sens de marche;

— la figure 6 est une coupe suivant la ligne VI—VI de la figure 2 avec le piston en position d'inversion de sens de marche;

— la figure 7 est une vue analogue à celle de la figure 1, montrant une variante de conduit d'alimentation en fluide;

— la figure 8 est une vue en coupe axiale d'un moteur selon l'invention accouplé à un filtre autonettoyable.

Comme représenté au dessin le moteur hydraulique comporte un corps 1 dans lequel est ménagée une chambre 2, fermée par un couvercle 3 maintenu par deux colonnes 4 et 5 formant tirants. Un piston 6 coulissant dans la chambre 2 sur les colonnes 4 et 5 définit deux chambres 2a et 2b.

Dans le couvercle 3 est monté un arbre 7 dont la partie intérieure comporte un perçage axial 7a avec deux rampes hélicoïdales 8, diamétralement opposées, pratiquées dans la paroi de cette partie d'arbre creux qui pénètre dans une ouverture axiale 9 du piston, un axe diamétral 10 du piston passant à travers les deux rampes hélicoïdales. Ainsi le mouvement alternatif du piston transmet à l'axe 7 un mouvement rotatif alterné qui peut assurer la rotation unidirectionnelle d'un axe 11 coaxial à l'axe 7 accouplé à ce dernier par une roue libre 12.

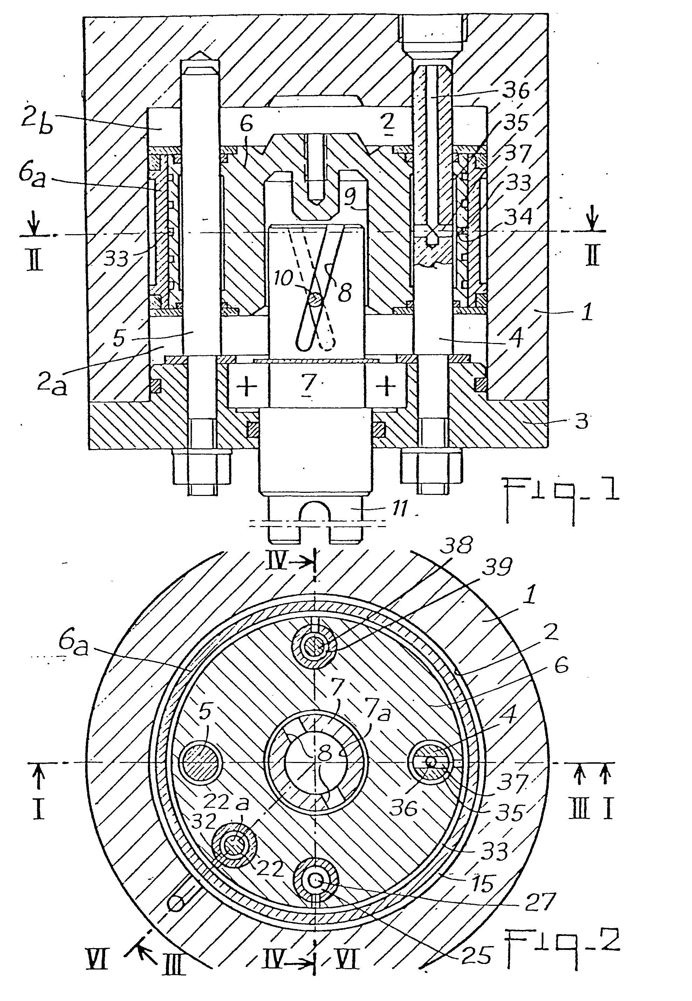

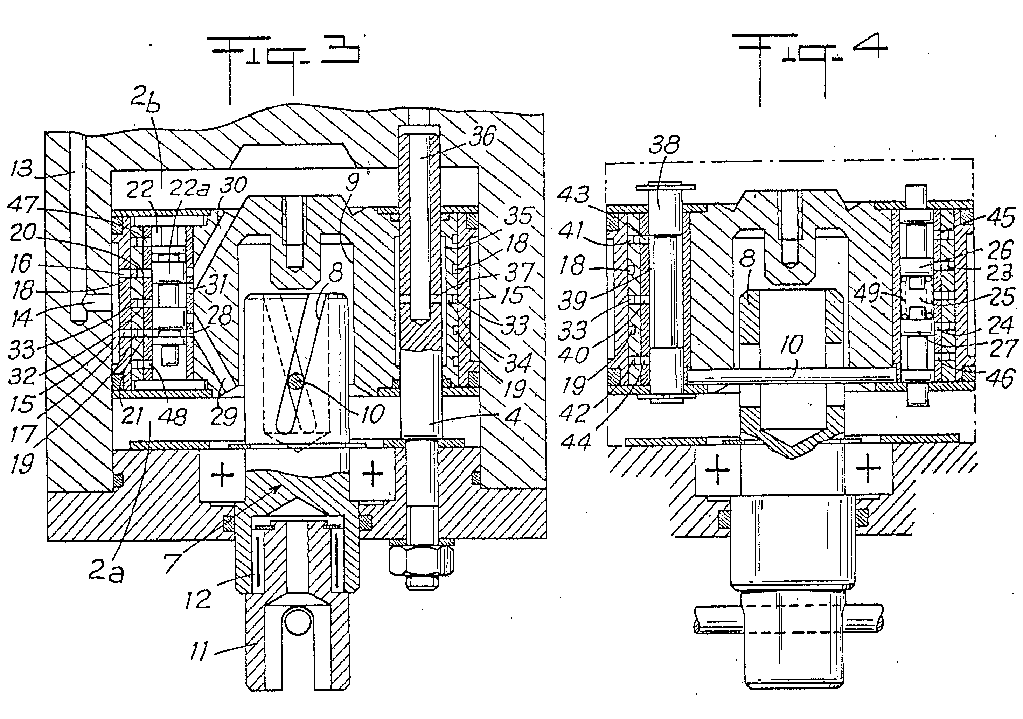

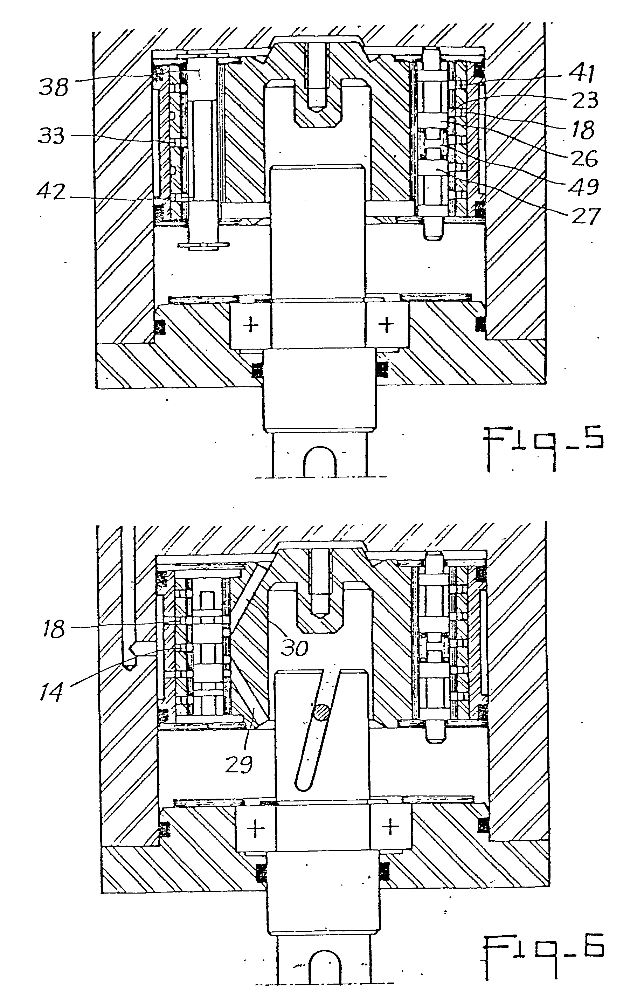

L'arrivée du fluide moteur se fait par un conduit 13 ménagé dans le corps 1 (figure 3) qui débouche par un conduit 14 dans la chambre 2.

Le piston est constitué par un noyau 6 sur la périphérie duquel un manchon 6a est fixé de façon étanche.

La face extérieure du manchon 6a présente une gorge annulaire qui constitue une chambre périphérique annulaire 15 avec la paroi intérieure de la chambre 2. Dans le manchon sont ménagés deux conduits 16 et 17, de préférence symétriques l'un de l'autre par rapport au plan médian du manchon.

Le noyau 6 du piston présente au moins trois rainures annulaires formant avec la paroi interne du manchon 6a trois gorges annulaires 33, 18 et 19. Les deux gorges 18 et 19 sont situées en regard des conduits 16 et 17 du manchon, cependant que la gorge 33 est disposée entre les deux gorges 18 et 19, de préférence dans le plan médian du noyau 6.

Dans l'exemple représenté sur les figures 1 à 6 le noyau 6 présente encore deux rainures annulaires formant avec la paroi interne du manchon deux gorges annulaires 41 et 42 disposées respectivement au-delà des gorges 18 et 19 par rapport à la gorge médiane 33.

Une chambre cylindrique 22 est ménagée dans le noyau 6 parallèlement à son axe. Dans la paroi de cette chambre 22 sont prévus, d'une part un conduit 32 communiquant avec la gorge médiane 33, d'autre part deux conduits 20 et 21 communiquant respectivement avec les gorges 18 et 19 et, enfin, deux conduits 47 et 48 débouchant dans les gorges 41 et 42.

D'autre part la chambre 22 est reliée à chacune des chambres 2*a* et 2*b* par des conduits 29 et 30 traversant le noyau 6.

Un piston distributeur 22*a* coulisse dans la chambre 22 et ferme, suivant sa position, l'un des conduits 20 ou 21, tout en mettant en communication, comme représenté sur la figure 3, le conduit 21 (ou 20) avec le conduit 29 (ou 30) et le conduit 30 (ou 29) avec le conduit 33.

Une chambre cylindrique 39 analogue à la chambre 22 comporte un distributeur coulissant 38 dont la longueur est supérieure à l'épaisseur du noyau 6. La chambre 39 comporte des conduits 40, 43, 44 communiquant respectivement avec les gorges annulaires 33, 41 et 42. Dans chacune de ses positions le distributeur 38 obture l'un des conduits 44 (ou 43) tout en mettant l'autre en communication avec le conduit 40 et la gorge 33.

Une chambre cylindrique 25, également analogue à la chambre 22, est équipée de deux pistons-relais 26 et 27 entre lesquels est prévu un ressort 49. Les extrémités des pistons 26 et 27 font saille à l'extérieur du noyau.

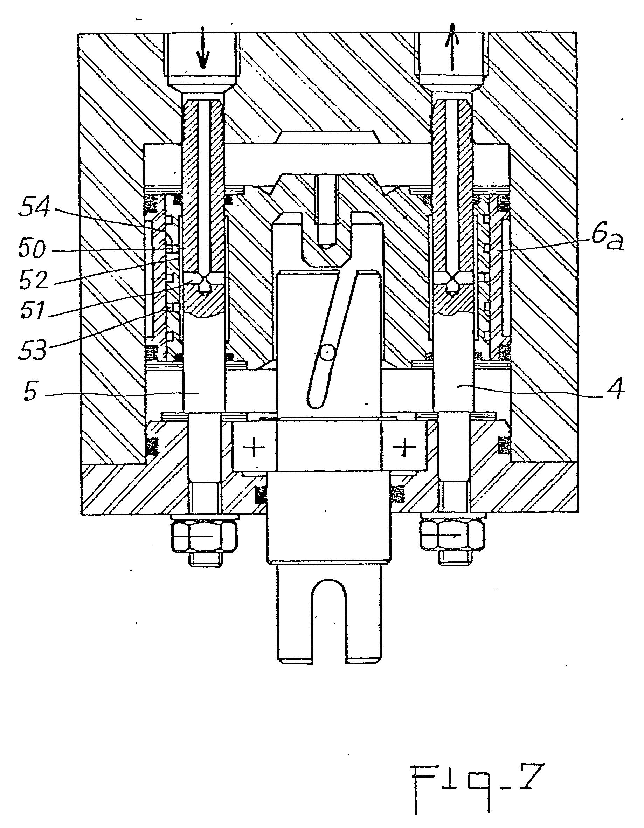

La chambre 25 comporte enfin des conduits 23, 24, 45 et 46 qui communiquent respectivement avec les gorges annulaires 18, 19, 41 et 42. Dans la position de repos, visible sur la figure 4, les pistons-relais 26 et 27 obturent les conduits 23 et 24 mais sont susceptibles de mettre en communication, respectivement, le conduit 23 avec le conduit 45 ou le conduit 24 avec le conduit 46.

Enfin un alésage est prévu dans le noyau 6 du piston en regard du tirant 4. Avec le tirant 4 cet alésage constitue une chambre 35 qui communique avec la gorge annulaire 33 par un conduit 34. D'autre part, dans le tirant est percé un canal axial 36 qui communique avec la chambre 35 par un conduit 37. Le canal 36 est relié à l'évacuation du-fluide.

Le fonctionnement de moteur est alors le suivant.

Dans la position du piston représentée sur les figures 1 à 4 le fluide moteur pénètre dans la chambre 22 par la chambre 15, le conduit 17, la gorge 19 et le conduit 21. Il en ressort par les conduits 28 et 29. Le conduit 29 débouchant sur la face inférieure du piston dans la chambre 2*a*, le fluide moteur pousse ainsi le piston vers le haut des figures 1, 3 et 4.

Le fluide se trouvant dans la chambre supérieure 2*b* s'évacue par les conduits 30 et 31 qui mènent le fluide à la chambre 22 où le distributeur 22*a* autorise le passage du fluide par le conduit 32 vers la gorge annulaire 33. Par le conduit 34, le fluide se dirige vers la chambre annulaire 35 entourant la colonne 4 et s'écoule par le canal axial 36 communiquant par le conduit 37 avec la chambre 35.

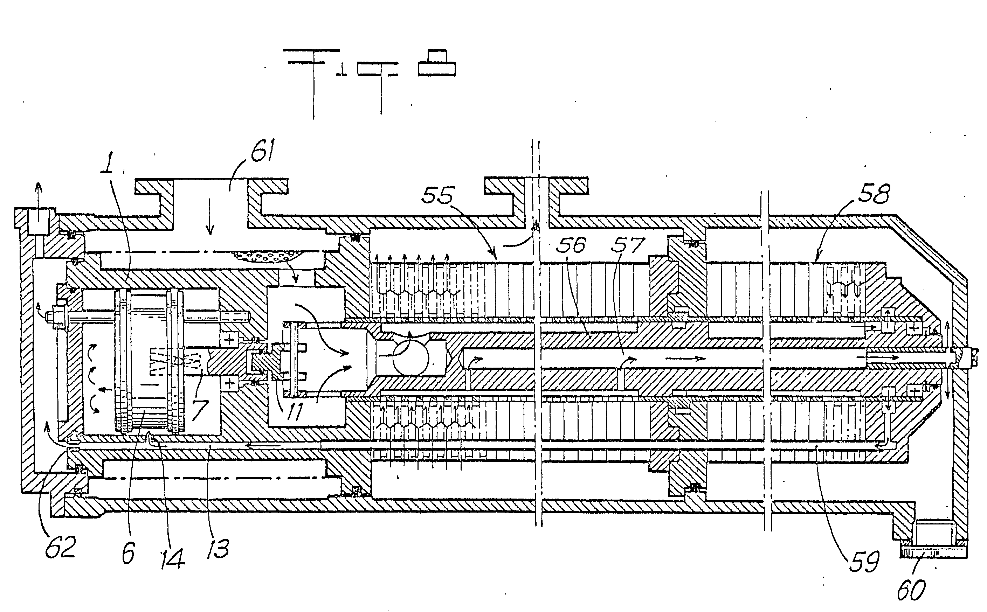

Lorsque le piston 6 arrive au point mort haut (figure 5), le distributeur 38 est poussé vers le bas et il met en communication les gorges 33 et 42. Par ailleurs le piston-relais 26 est également poussé vers le bas contre le ressort 49; il met ainsi en communication les conduits 23 et 45 et par conséquent les gorges 18 et 41.

Le fluide d'alimentation contenu dans la gorge 18 passe donc dans la gorge 41 et alimente la zone supérieure de la chambre 22 par le conduit 47. Le distributeur 22*a* est alors pousé vers le bas et prend la position représentée sur la figure 6. Il établit la communication du conduit 30 avec la gorge 18, et celle du conduit 29 avec la gorge 33 ce qui permet au fluide moteur d'arriver dans la chambre supérieure 2*b* et d'être évacué de la chambre inférieure 2*a* par le canal 36. Dès que le piston s'écarte du fond supérieur de la chambre 2, le piston-relais 26 reprend sa position de repos grâce au ressort 49.

On notera qu'après inversion du mouvement du piston 6 les distributeurs 22*a* et 38 sont maintenus dans leur nouvelle position par l'action de la pression différentielle existant entre les deux chambres 2*a* et 2*b*.

L'invention n'est pas limitée au mode de réalisation qui vient d'être décrit; elle en couvre au contraire toutes les variantes qui sont contenues dans les revendications. En particulier on a représenté sur la figure 7 une variante dans laquelle l'alimentation en fluide moteur est consituée d'une façon analogue à l'évacuation.

Le tirant 5 comporte un canal axial 50 qui communique par un conduit transversal 51 avec une chambre annulaire 52 ménagée dans le piston 6 et entourant la colonne 5, la chambre 52 communiquant par des conduits 53 et 54 avec les gorges 18 et 19.

Les autres organes sont analogues à ceux qui sont représentés sur les figures 1 à 6, et le fonctionnement est bien entendu le même que celui qui a été décrit plus haut.

De même une autre variante non représentée consisterait à réaliser une alimentation en fluide du même type que celle visible sur la figure 7 et une évacuation analogue à l'alimentation représentée sur les figures 1 à 6. Dans ce dernier cas la gorge annulaire 33 communiquerait avec la chambre annulaire 15 située sur la périphérie externe du manchon 6*a* et le canal d'évacuation 36 serait situé dans le corps 1 du moteur.

Comme représenté à la figure 8, le moteur objet de l'invention peut être accouplé à un filtre autonettoyable qui comporte un filtre proprement dit 55 composé d'un empilement de disques filtrants. Le liquide à filtrer arrivant par le conduit 61 s'écoule par un passage central dans lequel tourne un distributeur 56 qui est entraîné par l'axe 11 du moteur et qui isole une série de chambres pour permettre leur lavage par contre-courant. Ce type de filtre est semblable à celui décrit au brevet français 71 18275 déjà cité. Le distributeur envoie par son canal central 57 le fluide de lavage vers un second filtre 58 constitué également d'un empilage de disques filtrants fonctionnant à l'inverse du filtre 55. Le fluide de lavage à filtrer arrive en effet par l'extérieur du filtre 55 et le fluide filtré sort par le passage central d'où il est évacué par un conduit 59 vers le réservoir. Toutefois il faut souligner que le conduit d'alimentation 13 du moteur est relié au conduit 59 et qu'une restriction 62 est disposée en aval du conduit 14, permettant ainsi de disposer d'une pression suffisante pour actionner le moteur. Une partie du fluide filtré de lavage sert donc à actionner le piston 6 dans les conditions exposées plus haut, ce qui provoque la rotation alternée de l'axe 7 entraînant la rotation unidirectionnelle de l'axe 11 accouplé au distributeur rotatif 56. Le carter du filtre du fluide de lavage comporte un bouchon 60 permettant d'évacuer les boues qui se déposent dans ce carter après le lavage des éléments filtrants du filtre 58.

## Revendications

1. Moteur hydraulique, notamment pour l'entraînement d'un filtre autonettoyable, comportant un piston se déplaçant, selon un mouvement de va-et-vient commandé automatiquement, à l'intérieur d'un cylindre (1) dans les parois duquel débouchent une canalisation d'alimentation (13) en fluide hydraulique sous pression et une canalisation d'évacuation (36) dudit fluide, ledit piston définissant, avec le cylindre, deux chambres (2a, 2b) pour la réception du fluide hydraulique et comportant des organes de commande parallèles à l'axe du piston et coulissant dans celui-ci, lesdits organes de commande assurant la communication sélective en successive de la canalisation d'alimentation (13) et de la canalisation d'évacuation (36) avec chacune desdites chambres, par l'intermédiaire d'un conduit (29, 30) ménagé à l'intérieur du piston, caractérisé en ce que le piston est constitué par un noyau central (6) et un manchon (6a) monté de façon étanche sur le noyau, lequel présente à sa périphérie au moins trois rainures annulaires formant avec la paroi interne du manchon trois gorges annulaires étanches (18, 33, 19), la gorge médiane (33) étant en communication permanente avec la canalisation d'évacuation (36) et les deux gorges adjacentes (18, 19) étant en communication permanente avec la canalisation d'alimentation (13, 50), cependant que la gorge médiane (33) et l'une des deux gorges adjacentes (18, 19) sont mises sélectivement et respectivement en communication avec les deux chambres (2a et 2b) du cylindre par l'intermédiaire d'un distributeur à tiroir coulissant (22a) monté dans le piston, dont les orifices de sortie (28, 31) sont reliés à chacune des deux chambres (2a, 2b) par des conduits (29 et 30) ménagés dans le noyau (6) du piston et débouchant sur chacune des faces de celui-ci.

2. Moteur selon la revendication 1, caractérisé en ce que la paroi extérieure du manchon 6a du piston présente une rainure annulaire définissant avec la paroi intérieure du cylindre (1) une chambre annulaire (15) dans laquelle débouche la canalisation d'alimentation (13).

3. Moteur selon la revendication 1, caractérisé en ce qu'au moins un tirant (5), le long duquel coulisse le piston, présente un conduit axial (50) constituant la canalisation d'alimentation, cependant que le piston présente une rainure annulaire constituant avec le tirant (5) une chambre (52) dans laquelle débouche un conduit (51) relié au conduit axial (50), cependant que ladite chambre (52) est mise en communication avec les gorges annulaires (18, 19) adjacentes à la gorge médiane (33), par des conduits (53 et 54).

4. Moteur selon l'une quelconque des revendications précédentes, caractérisé en ce qu'au moins un tirant (4), le long duquel coulisse le piston, présente au moins un conduit axial (36) constituant la canalisation d'évacuation, cependant que le piston présente une rainure annulaire constituant avec le tirant (4), une chambre annulaire (35) dans laquelle débouche un conduit (37) relié au conduit axial (36), cependant que ladite chambre (35) est mise en communication avec la gorge annulaire médiane (33) par un conduit (34).

5. Moteur selon l'une quelconque des revendications précédentes, caractérisé en ce que le tiroir (22a) du distributeur évolue dans une chambre (22) ménagée dans le noyau (6) du piston, et en ce que la commande dudit tiroir comporte deux conduits (47 et 48) disposés respectivement à chacune des extrémités de la chambre (22) et susceptibles d'être mis sélectivement en communication avec la canalisation d'alimentation.

6. Moteur selon la revendication 5, caractérisé en ce que le corps (6) du piston comporte deux rainures annulaires supplémentaires constituant avec le manchon 6a des gorges annulaires (41 et 42) communiquant avec les conduits (47 et 48) de la chambre (22) du tiroir cependant qu'un sélecteur comportant, d'une part, un distributeur (38), coulissant dans le piston et partiellement à l'extérieur de celui-ci, d'autre part, un ensemble de deux pistons-relais (26 et 27) faisant partiellement saillie à l'extérieur du piston (6) assure la mise en communication sélective et successive des gorges annulaires (41 et 42) respectivement avec l'une des gorges annulaires (18 ou 19) et avec la gorge médiane (33).

## Claims

1. Hydraulic engine in particular for driving a self-cleaning filter, comprising a piston moving with an automatically controlled reciprocate motion, inside a cylinder (1) into the walls of which issue a pressurized hydraulic fluid supply pipe (13) and an exhaust pipe (36) for said hydraulic fluid, the said piston defining with the cylinder two chambers (2a, 2b), to receive the hydraulic fluid and comprising drive members parallel to the piston axis and sliding therein, the said driving members ensuring the selective and successive communication of the supply pipe (13) and exhaust pipe (36) with each one of the chambers, via a conduit (29, 30) provided inside the piston, characterized in that said piston is composed of a central core (6) and a sleeve (6a) mounted in sealed manner on said core, the said core being provided on its periphery with at least three annular grooved portions forming with the inside wall of the sleeve, three annular fluid-tight grooves (18, 33, 19) the middle groove (33) being in permanent communication with the exhaust pipe (36) and the two adjacent grooves (18, 19) being in permanent communication with the supply pipe (13, 50) whereas the middle groove (33) and one of the two adjacent grooves (18, 19) are selectively and respectively connected with the two chambers (2a and 2b) of the cylinder via a slide valve (22a) mounted in the piston, the outlets (28, 31) of which are connected to the two chambers (2a, 2b) via conduits (29 and 30) provided in the core (6) of the piston and issuing on to each of the faces thereof.

2. Engine according to claim 1, characterized in that the outer wall of the sleeve 6a of the piston is provided with an annular groove which defines with the inside wall of the cylinder (1) an annular chamber (15) into which issues the supply conduit (13).

3. Engine according to claim 1, characterized in that at least a tie (5), along which slides the piston, is provided with an axial conduit (50) which constitutes the supply conduit, whereas the piston is provided with an annular groove which constitutes with the tie (5) a chamber (52) into which issues a conduit (51) connected to the axial conduit (50), and whereas the said chamber (52) is caused to communicate with the annular grooves (18, 19) adjacent the middle groove (33), via the conduits (53 and 54).

4. Engine according to any one of the preceding claims, characterized in that at least a tie (4), along which slides the piston, is provided with at least an axial channel (36) constituting the exhaust channel, whereas the piston is provided with an annular groove which constitutes with the tie (4) an annular chamber (35) into which issues a conduit (37) connected to the axial channel (36), and whereas the said chamber (35) is caused to communicate with the middle groove (33) via conduit (34).

5. Engine according to any one of the preceding claims characterized in that the piston valve (22a) moves inside a chamber (22) provided in the core (6) of the piston and in that the control of said piston valve comprises two conduits (47 and 48) situated respectively at each end of the chamber (22) adapted to communicate selectively with the supply channel.

6. Engine according to claim 5, characterized in that the core (6), of the piston comprises two further grooved portions which, with the sleeve (6a) constitute two annular grooves (41 and 42) communicating with the conduits (47 and 48) of the chamber (22) of the piston valve whereas a selector, comprising on the one hand a slide valve (38) sliding in the piston and partly on the outside thereof, and on the other hand an assembly consisting of two relaying pistons, (26 and 27) and projecting partly outside the piston (6), ensures the selective and successive communication of the said annular grooves (41 and 42) with one of the other two annular grooves (18 or 19) and with the middle groove (33).

## Patentansprüche

1. Hydraulikmotor, insbesondere zum Antreiben eines selbstreinigenden Filters, mit einem gemäß einer automatisch gesteuerten Hin- und Herbewegung im Inneren eines Zylinders verschiebbarren Kolben, in dessen Wände ein Rohrsystem zur Zuführung von Hydraulikflüssigkeit unter Druck und ein Rohrsystem zur Ableitung der Flüssigkeit münden, wobei der Kolben mit dem Zylinder zwei Kammern zur Aufnahme der Hydraulikflüssigkeit begrenzt und zur Kolbenachse parallele und in demselben bewegliche Steuerorgane umfaßt, welche Steuerorgane die selektive und sukzessive Verbindung des Zuführungsrohrsystems und des Ableitungsrohrsystems mit jeder der Kammern unter Zwischenschaltung einer im Kolbeninneren angeordneten Leitung gewährleisten, dadurch gekennzeichnet, daß der Kolben ein zentrales Kernstück (6) und eine dichtend auf dem Kernstück aufgesetzte Muffe (6a) umfaßt, wobei das Kernstück um seinen Umfang zumindest drei Ringnuten aufweist, die mit der Innenwand der Muffe drei dichte Ringdurchlässe (18, 33, 19) bilden, wobei der mittlere Durchlaß (33) in ständiger Verbindung mit dem Ableitungsrohrsystem (36) steht und die beiden benachbarten Durchlässe (18, 19) in ständiger Verbindung mit dem Zuführungsrohrsystem (13, 50) stehen, während der mittlere Durchlaß (33) und einer der beiden benachbarten Durchlässe (18, 19) mittels eines beweglichen, im Kolben angeordneten Steuerschiebers (22a) jeweils selektiv mit den beiden Zylinderkammern (2a und 2b) verbunden werden, wobei die Austrittsöffnungen (28, 31) des Kolbens durch im Kernstück (6) des Kolbens angeordnete und an jeder Seite desselben einmündende Leitungen (29 und 30) mit jeder der beiden Kammern (2a, 2b) verbunden sind.

2. Motor nach Anspruch 1, dadurch gekennzeichnet, daß die Außenwand der Muffe 6a des Kolbens eine Ringnut aufweist, die mit der Innenwand des Zylinders (1) eine Ringkammer (15) begrenzt, in welche das Zuführungsrohrsystem (13) mündet.

3. Motor nach Anspurch 1, dadurch gekennzeichnet, daß zumindest eine Zugstange (5), entlang welcher sich der Kolben bewegt, eine das Zuführungsrohrsystem bildende axiale Leitung (50) aufweist, wobei der Kolben eine mit der Zugstange (5) eine Kammer (52) bildende Ringnut aufweist, in welche Kammer eine mit der axialen Leitung (50) verbundene Leitung (51) mündet, während die Kammer (52) mit den neben dem mittleren Durchlaß (33) befindlichen Ringdurchlässen (18, 19) über Leitungen (53 und 54) in Verbindung steht.

4. Motor nach einem der vorhergehenden Ansprüche, dadurch gekennzeichnet, daß zumindest eine Zugstange (4), entlang welcher sich der Kolben bewegt, zumindest eine das Ableitungsrohrsystem bildende axiale Leitung (36) aufweist, wobei der Kolben eine mit der Zugstange (4) eine Ringkammer (35) bildende Ringnut aufweist, in welche Kammer eine mit der axialen Leitung (36) verbundene Leitung (37) mündet, während die Kammer (35) mit dem mittleren Ringdurchlaß (33) über eine Leitung (34) in Verbindung steht.

5. Motor nach einem der vorhergehenden Ansprüche, dadurch gekennzeichnet, daß sich der Steuerschieber (22a) in einer im Kernstück (6) des Kolbens vorgesehenen Kammer (22) bewegt und die Steuerung des Schiebers zwei Leitungen (47 und 48) aufweist, die jeweils an einem Ende der Kammer (22) angeordnet und wahlweise mit dem Zuführungsrohrsystem in Verbindung bringbar sind.

6. Motor nach Anspruch 5, dadurch gekennzeichnet, daß der Körper (6) des Kolbens zwei zusätzliche Ringnuten aufweist, die mit der Muffe (6a) mit den Leitungen (47 und 48) der Kammer (22) des Schiebers kommunizierende Ringdurchlässe (41 und 42) bilden, wobei ein Selektor, bestehend aus einem im Kolben und teilweise außerhalb desselben beweglichen Verteiler (38) einerseits und aus einer teilweise aus dem Kolben (6) herausragenden Einheit aus zwei Kolbenrelais (26, 27) anderseits, die selektive und sukzessive Verbindung der Ringdurchlässe (41 und 42) mit einem der Ringdurchlässe (18 oder 19) bzw. mit dem mittleren Durchlaß (33) gewährleistet.

Fig-1

Fig-2

Fig. 4

Fig. 3

Fig-5

Fig-6

Fig. 7

Fig. 4